# FASCICULE DE BREVET EUROPEEN

(11) **EP 3 700 877 B1**
(45) Date de publication et mention de la délivrance du brevet: **14.08.2024**
(21) Numéro de dépôt: 18800721.5
(22) Date de dépôt: 23.10.2018
(51) Int. Cl.: C04B 35/117, C04B 35/14, C04B 35/185, C04B 35/46, C04B 35/56, C04B 35/634, C04B 35/82

(54) **INSTALLATION POUR LE DEPOT D'UNE MECHE CHARGEE MISE EN FORME**
VORRICHTUNG ZUM ABLEGEN EINES GEFORMTEN GEFÜLLTEN FASERSTRANGS
FACILITY FOR DEPOSITING A SHAPED FILLED ROVING

(30) Priorité: 24.10.2017 FR 1760015
(43) Date de publication de la demande: 02.09.2020
(73) Titulaire: Safran Ceramics, 33185 Le Haillan (FR)
(72) Inventeur: SCHWARTZ, Mathieu, 77550 Moissy-Cramayel (FR); DELEHOUZE, Arnaud, 77550 Moissy-Cramayel (FR); LAVAL, Nicolas, 77550 Moissy-Cramayel (FR); DESJOYEAUX, Bertrand, 77550 Moissy-Cramayel (FR)
(74) Mandataire: Cabinet Beau de Loménie
(86) Numéro de dépôt international: PCT/FR2018/052632
(87) Numéro de publication internationale: WO 2019/081846

(56) Documents cités:
- FR-A1- 2 880 016
- FR-A1- 2 958 933
- FR-A1- 3 030 502
- FR-A1- 3 030 503
- FR-A1- 3 030 505
- US-A- 5 395 648

## Description

### Arrière-plan de l'invention

La présente invention se rapporte au domaine général des installations pour déposer une mèche chargée mise en forme destinée à être utilisée pour fabriquer une pièce en matériau composite. L'invention concerne également un procédé de fabrication d'une pièce en matériau composite mettant en oeuvre une telle installation.

Il est connu de réaliser des pièces en matériau composite par drapage en forme de strates de renfort fibreux pré-imprégnées. Dans certaines techniques actuelles, le drapage est effectué manuellement par un opérateur. Ces techniques peuvent engendrer des coûts de production de pièces relativement élevés et des risques d'erreur de positionnement des strates. Cela conduit à une certaine variabilité dans les performances mécaniques des pièces obtenues et à des pièces dont les propriétés mécaniques peuvent être améliorées.

D'autres solutions ont été développées comme la technique de placement automatique de fibres, aussi connue sous le nom AFP (« Automated Fiber Placement »). Cette technique mécanisée présente un intérêt pour réduire le coût de production des pièces en matériau composite. Dans l'art antérieur, des strates fibreuses sont drapées sur une surface afin d'obtenir une préforme de la pièce à obtenir, puis on injecte une barbotine comprenant des particules céramiques ou carbone dans la porosité de la préforme ainsi drapée, et enfin on fritte les particules pour former la matrice. Bien qu'efficaces, la durée et le coût de tels procédés peuvent encore être réduits.

Un concept de l'art antérieure est décrit dans la demande de brevet FR 2 880 016 A1.

### Objet et résumé de l'invention

A cet effet, l'invention propose, selon un premier aspect, une installation pour le dépôt d'une mèche chargée mise en forme destinée à être utilisée pour fabriquer une pièce en matériau composite, l'installation comprenant au moins :
un dispositif d'alimentation en mèche fibreuse imprégnée par une composition comprenant un liant et des charges céramiques ou carbone,
une filière de mise en forme et de drainage du liant définie par au moins une face poreuse, la filière présentant une section évolutive entre une section d'entrée et une section de sortie, la section d'entrée étant supérieure à la section de sortie,
un support en communication avec la sortie de la filière sur lequel la mèche mise en forme est destinée à être déposée, et
un premier dispositif de convoyage configuré pour transporter la mèche depuis le dispositif d'alimentation au travers de la filière et jusqu'au support.

On entend par « mèche » un ensemble de fibres ou filaments sensiblement parallèles entre eux et réunis en une bande non tissée. La section d'entrée ou de sortie correspond à la surface définie par l'ouverture d'entrée ou de sortie de la filière.

Avec une telle installation, il devient possible de fabriquer une mèche chargée mise en forme, c'est-à-dire imprégnée d'une composition comprenant un liant et des charges et présentant des dimensions prédéfinie, notamment utilisable dans un procédé de fabrication mettant en oeuvre la technique AFP. La filière de mise en forme et de drainage du liant de l'installation selon l'invention permet ainsi de calandrer la mèche à une taille prédéterminée tout en éliminant une partie du liant et piégeant les charges dans la mèche, afin d'obtenir un taux de charges plus élevé dans la mèche. Le taux de charges est augmenté grâce à la réduction du volume occupé par la mèche en drainant une partie du liant, sans toutefois laisser les charges s'échapper par filtration à l'aide de la face poreuse.

Grâce à une telle installation, en augmentant suffisamment le taux de charges dans la mèche, il n'est plus nécessaire de réaliser une étape d'injection d'une barbotine, ou plus généralement d'introduire des charges supplémentaires, dans la porosité des mèches déposées pour former une préforme. En d'autres termes, en augmentant le taux de charges dans la mèche comme le permet l'installation, et en utilisant un liant éliminable (par exemple sous l'effet de la chaleur), on peut directement fritter la préforme constituée d'un drapage de mèches sortant de l'installation, et obtenir la porosité désirée sans avoir à réaliser au préalable une étape d'introduction de charges dans la préforme.

De manière générale, on choisira la taille des pores de la face poreuse pour assurer un drainage du liant tout en piégeant les charges dans la mèche. La face poreuse peut présenter une taille de pores strictement inférieure à la taille des charges. Dans un exemple de réalisation, la taille D90 des pores peut être strictement inférieure à la taille D10 des charges. Par exemple, la taille D90 des pores peut être inférieure ou égale à 10 µm, voire inférieure ou égale à 5 µm, ou encore inférieure ou égale à 0,3 µm. On notera que la taille des pores de la face poreuse ne doit pas nécessairement être inférieure à la taille des charges. En effet, les charges viennent généralement obturer partiellement des pores qui présentent une taille plus importante que la taille des charges, ce qui réduit la taille effective des pores et assure tout de même la fonction de filtration.

Dans un exemple de réalisation, le matériau des faces poreuses peut être un matériau poreux présentant une porosité ouverte afin d'assurer le drainage du liant. Le matériau poreux peut notamment être microporeux ou nanoporeux, par exemple un matériau céramique nanoporeux pouvant être obtenu par un frittage partiel de poudres céramiques, une mousse céramique ou métallique, ou un matériau organique microporeux.

Dans un exemple de réalisation, l'installation peut comprendre en outre un deuxième dispositif de convoyage configuré pour faire circuler un film poreux entre la mèche et la face poreuse, le film poreux présentant une taille de pores strictement supérieure à la taille des charges. Ce film facilite le convoyage de la mèche dans la filière tout en étant perméable à la composition. Par exemple, la taille D50 des pores du film poreux peut être au moins deux fois supérieure à la taille D50 des charges.

Dans un exemple de réalisation, l'installation peut comprendre en outre un dispositif de pompage en communication avec les faces poreuses. Par exemple, le dispositif de pompage peut comprendre une pompe reliée à chacune des faces poreuses. La présence du dispositif de pompage peut permettre d'améliorer le drainage du liant lorsque le seul convoyage de la mèche dans la filière n'est pas suffisamment efficace.

Dans un exemple de réalisation, l'installation comprend un dispositif de chauffage de la filière. Ce dispositif permet de chauffer la mèche traversant la filière. Ainsi, il permet d'adapter la viscosité du liant, par exemple de le ramollir ou liquéfier, pour en faciliter le drainage.

Dans un exemple de réalisation, l'installation peut comprendre en outre une tête de dépose en communication avec la sortie de la filière et configurée pour déposer la mèche mise en forme sur le support.

Dans un exemple de réalisation, la tête de dépose peut être une tête de dépose pour le placement automatique de fibres, c'est-à-dire pour la mise en oeuvre d'une technique AFP. Pour des raisons de concision, la technique de placement automatique de fibres sera dans la suite désignée par « technique AFP ».

Dans un exemple de réalisation, le support peut constituer un rouleau de stockage de la mèche mise en forme. Dans certains cas, il peut être avantageux que l'installation comprenne en outre un dispositif d'alimentation en film plastique en communication avec le rouleau de stockage, afin de séparer les couches de mèche enroulées sur le rouleau de stockage par un film plastique et permettre leur séparation ultérieure pour débobiner la mèche plus facilement.

Dans un exemple de réalisation, la face poreuse peut être mobile dans une direction transversale par rapport à une direction de convoyage de la mèche dans la filière. Cette disposition avantageuse permet à la face poreuse de venir compacter la mèche dans la filière pour améliorer le drainage du liant.

Dans un exemple de réalisation, la filière peut comprendre deux faces poreuses situées en regard l'une de l'autre.

L'invention vise enfin, selon un deuxième aspect, un procédé de fabrication d'une pièce en matériau composite, comprenant au moins :
- la formation d'une préforme fibreuse comprenant les charges céramiques ou carbone à partir d'une ou plusieurs mèches mises en forme à l'aide de l'installation telle que celle présentée ci-avant, et
- la formation d'une matrice dans la porosité de la préforme fibreuse à partir des charges céramiques ou carbone.

Dans un exemple de réalisation, la matrice peut être formée par frittage des charges. Au cours de l'étape de frittage, le liant peut être éliminé et constitue ainsi un liant fugitif. Avec une telle disposition, on peut obtenir la matrice en une seule étape de traitement thermique de frittage.

Dans un exemple de réalisation, la mèche peut avancer pas à pas dans la filière lors de sa mise en forme. Avantageusement, la face poreuse peut être mobile dans une direction transversale par rapport à une direction de convoyage de la mèche dans la filière afin de venir compacter la mèche et drainer le liant entre deux avances successives.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique en coupe montrant une installation selon un mode de réalisation de l'invention,
- la figure 2 est une vue schématique en coupe montrant une tête de dépose utilisable pour déposer une mèche afin de former une structure fibreuse par technique AFP, et
- la figure 3 est un ordinogramme montrant les différentes étapes d'un procédé de fabrication d'une pièce en matériau composite selon l'invention.

### Description détaillée de l'invention

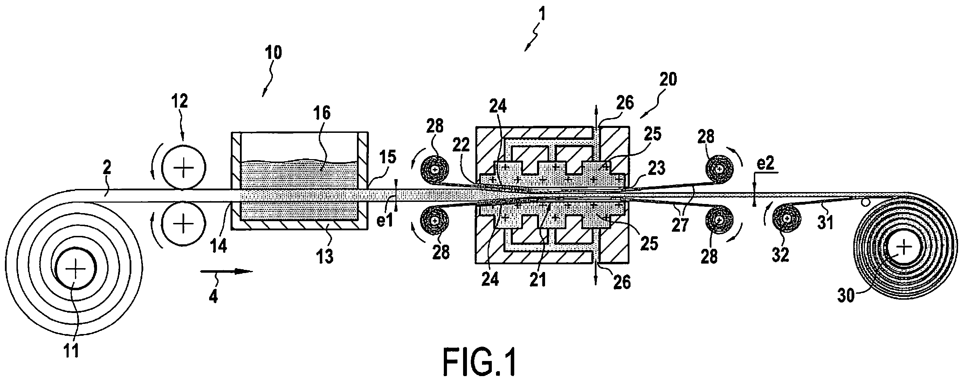

La figure 1 montre une installation 1 selon un mode de réalisation de l'invention. L'installation 1 est destinée à être utilisée pour déposer une mèche 2 chargée et mise en forme, la mèche 2 étant elle-même destinée à être utilisée pour fabriquer une pièce en matériau composite. Dans l'exemple illustré ici, la mèche 2 se déplace dans l'installation 1 dans la direction indiquée par la flèche 4, correspondant au sens de convoyage.

L'installation 1 comprend, d'amont en aval dans le sens de convoyage de la mèche 2 : un dispositif d'alimentation 10 en mèche fibreuse imprégnée par une composition comprenant un liant et des charges céramiques ou carbone, une filière 20 de mise en forme et de drainage du liant alimentée par le dispositif d'alimentation 10, et un rouleau 30 constituant un support en communication avec une sortie de la filière 20.

Le dispositif d'alimentation 10 comprend ici un rouleau 11 sur lequel la mèche 2 encore sèche peut être stockée. Un couple de rouleaux 12 contrarotatifs est configuré pour entraîner la mèche 2 et lui donner une taille prédéfinie avant son imprégnation. Dans l'exemple illustré, le dispositif d'alimentation 10 comprend aussi une cuve 13 munie d'une ouverture d'entrée 14 par laquelle la mèche 2 sèche entre dans la cuve, et d'une ouverture de sortie 15 par laquelle la mèche 2 imprégnée peut sortir. La cuve 13 contient une composition 16 comprenant un liant et des charges céramiques ou carbone. La cuve 13 peut en outre comprendre des moyens (non représentés) pour homogénéiser la composition 16, par exemple un dispositif d'agitation. A l'intérieur de la cuve 13, la mèche est immergée dans la composition 16 en vue d'en être imprégnée. D'autres moyens pour imprégner la mèche sont bien entendus envisageables. La mèche 2 sèche peut être foisonnée et au moins partiellement désensimée avant d'entrer dans la cuve 13, afin de permettre une meilleure imprégnation de la composition à l'intérieur des filaments qui la composent.

La composition comprenant le liant et les charges céramiques ou carbone peut comprendre plus de 20% en volume de charges céramiques ou carbone, préférentiellement plus de 30% en volume.

Le dispositif d'alimentation 10 peut être configuré pour qu'avant l'imprégnation de la mèche 2, cette dernière présente des dimensions supérieures à celles que la mèche 2 aura en sortie de filière (dimensions finales). Par exemple, lorsque la mèche 2 présente une section rectangulaire, sa largeur dans le dispositif d'alimentation 10 peut être comprise entre 110% et 120% de sa largeur finale, et son épaisseur e1 peut être comprise entre 110% et 160% de son épaisseur finale e2. On peut veiller en effet à ce que la mèche 2 soit suffisamment aérée en entrant dans la cuve 13 pour que l'imprégnation soit plus efficace.

Divers matériaux peuvent être envisagés pour constituer les fibres de la mèche 2. En particulier, elle peut être formée de fibres céramiques ou en carbone. Les fibres céramiques peuvent être des fibres en matériau non-oxyde, comme le carbure de silicium SiC, ou en matériau oxyde comme l'alumine, le verre (fibres de verre) ou la mullite. Dans un exemple de réalisation, les fibres utilisées peuvent être des fibres SiC fournies sous la dénomination « Nicalon », « Hi-Nicalon » ou « Hi-Nicalon-S » par la société japonaise Nippon Carbon ou « Tyranno SA3 » par la société UBE. On peut encore utiliser des fibres d'alumine fournies sous la dénomination « Nextel » par la société 3M. Les fibres fournies sous la dénomination Torayca T300 par la société Toray constituent, quant à elles, un exemple de fibres de carbone utilisables. La mèche peut aussi comprendre des fibres polymériques, comme des fibres d'aramide (Kevlar^{®}), des fibres de bore ou des fibres carbone, ou un mélange de telles fibres. La mèche de fibres peut être titrée à au moins 5000 deniers, préférentiellement entre 10000 et 50000 deniers.

Les charges céramiques peuvent comprendre par exemple un matériau choisi parmi les suivants : SiC, Al₂O₃, SiO₂, (3Al₂O₃,2SiO₂), TiO₂, ZrO₂ ou un mélange de ces matériaux. Les charges céramiques ou carbone peuvent présenter une taille D50 préférentiellement inférieure ou égale à 5 µm, ou plus préférentiellement inférieure ou égale à 2 µm, voire encore plus préférentiellement inférieure ou égale à 1 µm. Par exemple, les charges céramiques ou carbone peuvent présenter une taille D50 comprise entre 0,3 µm et 1 µm. La taille D10 des charges céramiques ou carbone peut être inférieure ou égale à 0,3 µm.

De manière générale, le liant peut être un liant organique. Le liant peut comprendre un bitume, un goudron ou une résine naturelle. Le liant peut être un polymère unidimensionnel du type thermoplastique choisi parmi les suivants : les carbonates de polyalkylène, notamment le carbonate de polypropylène et le carbonate de polyéthylène, les copolyesters aliphatiques, tel que le succinate de polybutylène (PBS), les copolyesters semi-aromatiques, tels que le polyéthylène terephtalate (PET) et le polybutylène terephtalate (PBT), le polyméthacrylate de méthyle (PMMA), l'alcool polyvinylique (PVA), et leurs mélanges. Le liant peut être un liant organique bi-composants (thermodurcissable), par exemple comprendre une résine de la famille des époxydes. Le liant peut par exemple présenter une masse moléculaire moyenne comprise entre 10000 et 50000.

La filière 20 prend ici la forme d'un bloc à l'intérieur duquel est présent un canal 21 s'étendant horizontalement entre une entrée 22 et une sortie 23 de la filière. La filière 20 est configurée pour que la mèche 2 soit présente dans le canal 21. Dans l'exemple, le canal 21 présente une section rectangulaire évolutive. En particulier, sa section à l'entrée 22 est supérieure à sa section à la sortie 23. De la sorte, la filière 20 permet de modifier l'épaisseur de la mèche 2 en la faisant passer de l'épaisseur e1 à l'épaisseur e2 finale. Le canal 21 de la filière 20 est délimité sur les côtés par des faces verticales (non visibles sur la figure 1) d'une part, et verticalement par des faces poreuses 24 d'autre part. Dans l'exemple illustré, les faces poreuses sont planes et inclinées par rapport à l'horizontale. Dans l'exemple, la mèche 2 présente une épaisseur qui est réduite par rapport à sa largeur, et les faces poreuses 24 présentent ainsi une superficie plus importante que les faces verticales.

Les faces poreuses 24 peuvent constituer les faces d'un bloc de matériau poreux 25 tel qu'un matériau microporeux ou nanoporeux, par exemple du Porex^{®}, un bloc de matériau céramique microporeux obtenu par frittage partiel d'une poudre céramique, un bloc de mousse céramique ou métallique, ou encore un matériau organique microporeux. Chacune des faces poreuses peut présenter un taux de porosité volumique (porosité ouverte) supérieur ou égal à 10%, par exemple compris entre 10% et 40%. La taille des pores du matériau poreux 25 peut être choisie strictement inférieure à la taille des charges céramiques ou carbone, par exemple la taille D90 des pores est strictement inférieure à la taille D10 des charges céramiques ou carbone. De manière générale, on veillera à ce que la taille des pores du matériau poreux 25 permette de concentrer les charges dans la mèche 2 en les empêchant de s'en échapper, tout en permettant un drainage efficace du liant de la mèche 2.

Le drainage peut être effectué simplement par convoyage de la mèche 2 dans la filière, le convoyage créant une pression sur les faces poreuses 24 qui permet l'évacuation du liant. Toutefois, pour améliorer le drainage du liant, notamment lorsque ce dernier présente une viscosité élevée ou que le taux de charges céramiques ou carbone dans celui-ci est élevé, il peut être avantageux d'utiliser un dispositif de pompage (schématisé par des flèches sur la figure 1), tel qu'une pompe, relié à des sorties d'évacuation 26 de la filière. Un dispositif de chauffage (non représenté) peut être intégré à la filière, par exemple aux flancs de la filière, de manière à chauffer le liant pour réduire sa viscosité et améliorer son drainage au travers des faces poreuses 24. Les sorties d'évacuation 26 sont elles-mêmes reliées aux faces poreuses 24 par l'intermédiaire du matériau poreux 25.

Bien entendu, la forme de la section du canal 21 de la filière peut être différente de celle illustrée selon les besoins et la forme souhaitée pour la mèche 2. En outre, la filière 20 peut comprendre seulement les deux faces poreuses 24, notamment lorsque l'épaisseur de la mèche 2 est négligeable par rapport à la largeur de celle-ci.

Le convoyage de la mèche 2 à l'intérieur de l'installation 1 est assuré par un premier dispositif de convoyage qui comprend par exemple des moyens (non illustrés) pour faire tourner le rouleau 11, le rouleau 30, et les rouleaux 12. Le premier dispositif de convoyage peut être configuré pour que la mèche 2 se déplace dans la filière 20 préférentiellement à une vitesse comprise entre 0,01 m/min et 20 m/min, plus préférentiellement comprise entre 0,1 et 10 m/min, encore plus préférentiellement comprise entre 0,1 et 2 m/min. En particulier, la vitesse de convoyage sera choisie suffisamment faible pour que l'imprégnation dans le dispositif d'alimentation 10 soit réalisée correctement et que le drainage dans la filière 20 puisse s'opérer. On notera que le convoyage peut être continu ou, en variante, semi-continu. Par exemple, dans le cas semi-continu, la mèche 2 peut avancer pas à pas dans la filière, et les faces poreuses 24 peuvent se déplacer verticalement (c'est-à-dire dans une direction transversale à la direction de convoyage de la mèche 2 dans la filière) indépendamment l'une de l'autre de façon à comprimer la mèche 2 entre deux avances successives de la mèche 2.

Afin de faciliter le convoyage de la mèche 2 dans la filière 20, il peut être avantageux d'utiliser un deuxième dispositif de convoyage comprenant par exemple une paire de films poreux 27 mobiles qui accompagnent la mèche 2 dans la filière 20, chaque film poreux 27 étant entraîné par des rouleaux 28 situés en amont et en aval de la filière 20. Chaque film poreux 27 est positionné entre une face poreuse 24 et la mèche 2 et est au contact de celles-ci. Les films poreux 27 sont configurés pour pouvoir être traversés par le liant et les charges et ont pour rôle de faciliter le convoyage de la mèche 2 à travers la filière. La taille des pores des films poreux 27 peut ainsi être supérieure à celle des charges qui imprègnent la mèche 2. Par exemple, la taille D90 des pores des films poreux 27 peut être strictement supérieure à la taille D10 des charges céramiques ou carbone. La vitesse d'avance des films poreux 27 peut être identique à la vitesse de convoyage de la mèche 2 dans l'installation. Dans une variante non illustrée, l'installation 1 est dépourvue de films poreux 27 de sorte que la mèche 2 est au contact des faces poreuses 24 de la filière 20.

Dans l'installation illustrée, la mèche 2 sortant de la filière 20 est stockée sur un support, ici constitué par un rouleau de stockage 30. Afin d'éviter que des couches de la mèche 2 enroulée sur le support 30 n'adhèrent entre elles et puissent être débobinées plus facilement, on peut bobiner en même temps que la mèche 2 un film 31, par exemple un film plastique. L'alimentation en film 31 peut être réalisée par un dispositif d'alimentation en film plastique comprenant un rouleau 32 disposé par exemple au-dessous de la mèche 2 en amont du rouleau de stockage 30. La mèche 2 stockée sur le rouleau 30 peut ensuite être utilisée pour alimenter une tête de dépose comme il sera décrit ci-après. En variante, la mèche 2 peut être directement utilisée pour alimenter une tête de dépose en communication avec la sortie de la filière 20.

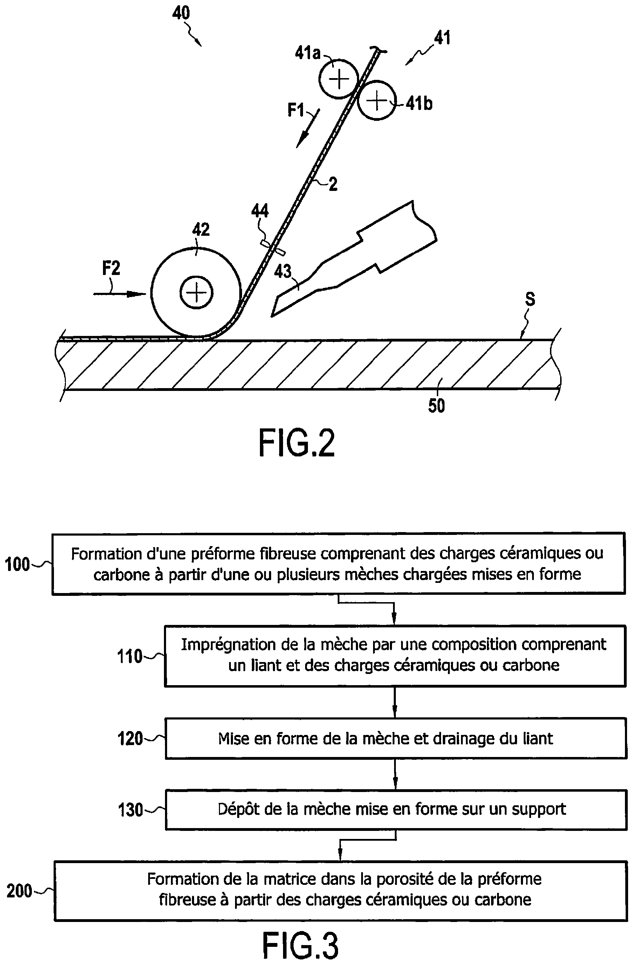

La figure 2 illustre schématiquement la structure d'une tête de dépose 40 d'un dispositif de mise en oeuvre d'une technique AFP. La tête de dépose 40 peut être utilisée dans l'installation 1 décrite ci-avant. La structure de la tête de dépose 40 illustrée est connue en soi. La tête de dépose 40 est alimentée par une mèche 2 imprégnée par un liant et des charges céramiques ou carbone afin de réaliser une préforme fibreuse.

La préforme fibreuse est formée sur la surface S d'un support 50. La tête de dépose 40 est, pour cela, alimentée par la mèche 2. La mèche 2 est acheminée par un élément de convoyage 41 jusqu'à un élément d'application de la pression 42 situé du côté de la surface S. L'élément de convoyage 41 est ici sous la forme d'un couple de rouleaux contrarotatifs 41a et 41b entre lesquels la mèche 2 est présente. L'élément de convoyage 41 permet de faire avancer la mèche 2 jusqu'à l'élément d'application de la pression 42 selon la direction matérialisée par la flèche F1. Lorsque la tête de dépose 40 est en communication avec une sortie de la filière 20, l'élément de convoyage 41 fait alors partie du premier dispositif de convoyage de l'installation 1.

L'élément d'application de la pression 42 applique une pression sur la mèche 2 afin de réaliser son dépôt sur la surface S. L'élément d'application de la pression 42 est ici sous la forme d'un rouleau. La tête de dépose 40 peut, en outre, comporter un élément chauffant 43 situé au voisinage de l'élément d'application de la pression 42. Cet élément chauffant 43 permet, en cas de besoin, de chauffer la mèche 2 lors de son dépôt afin de fluidifier le liant et ainsi conférer le pouvoir d'adhésion souhaité à la mèche déposée.

Lors du dépôt, la tête de dépose 40 est mobile afin d'appliquer la mèche 2 sur une première zone déterminée de la surface S (flèche F2). Une fois l'application réalisée sur la première zone, l'élément de découpe 44 de la tête de dépose 40 coupe la mèche 2. Après cette découpe, on obtient ainsi le dépôt d'une première structure fibreuse imprégnée, formée par un premier tronçon de la mèche 2, sur la première zone de la surface S. Initialement, avant dépôt de la première structure fibreuse, une couche initiale d'un matériau thermoplastique peut être déposée sur la première zone de la surface S et la première structure fibreuse peut ensuite être déposée sur cette couche de matériau thermoplastique. Le dépôt de cette couche initiale thermoplastique est optionnel.

La formation de la préforme est ensuite poursuivie par avancée de la mèche 2 dans la tête de dépose 40 jusqu'à l'élément d'application de la pression 42 par actionnement de l'élément de convoyage 41. La tête de dépose 40 peut être déplacée afin de réaliser le dépôt de la mèche 2 sur une deuxième zone de la surface S distincte de la première zone. Le dépôt d'une deuxième structure fibreuse imprégnée, formée par un deuxième tronçon de la mèche 2, sur la deuxième zone de la surface S est alors obtenu d'une manière similaire à celle décrite plus haut. La réalisation de la préforme est ensuite poursuivie par dépôt d'une ou plusieurs autres structures fibreuses imprégnées de la même manière que décrite plus haut.

La figure 3 résume les étapes d'un procédé de fabrication d'une pièce en matériau composite mettant en oeuvre l'installation 1 présentée ci-avant. La pièce en matériau composite comprend un renfort fibreux densifié par une matrice.

La première étape 100 consiste à former une préforme fibreuse comprenant des charges céramiques ou carbone à partir d'une ou plusieurs mèches imprégnées mises en forme. La préforme fibreuse est destinée à former le renfort fibreux de la pièce. Cette étape peut être réalisée dans une installation 1 selon l'invention. On peut décomposer l'étape 100 en plusieurs sous étapes. D'abord, une sous-étape 110 consiste à imprégner la mèche 2 par la composition comprenant un liant et des charges céramiques ou carbone. Cette sous-étape 110 est réalisée dans la partie de l'installation 1 correspondant au dispositif d'alimentation 10 comprenant notamment la cuve 16 dans laquelle est présente la composition. Puis, une sous-étape 120 consiste à mettre en forme la mèche et à drainer une partie du liant présent dans la mèche 2. Cette sous-étape 120 est réalisée dans la filière 20 de l'installation 1. En sortie de la filière 20 la mèche est mise en forme à des dimensions proches de ses dimensions finales et du liant a été drainé de celle-ci afin d'augmenter la concentration en charges dans la mèche 2. Puis, dans la sous-étape 130, on dépose la mèche 2 chargée mise en forme sur un support. Selon la configuration de l'installation 1, on peut déposer la mèche 2 sur un rouleau de stockage 30 pour ensuite utiliser ledit rouleau 30 pour alimenter par exemple une tête de dépose 40. En variante, il est possible d'alimenter directement la tête de dépose 40 avec la mèche 2 sortant de la filière 20. Dans l'un ou l'autre des cas, on peut alors former par technique AFP à l'aide de la tête de dépose 40, une préforme fibreuse de la pièce à fabriquer comme expliqué plus haut. D'autres méthodes que la technique AFP sont bien entendu envisageables pour former une préforme fibreuse à partir d'une mèche 2 chargée mise en forme.

La deuxième étape 200 du procédé consiste enfin à former de la matrice dans la porosité de la préforme fibreuse à partir des charges céramiques ou carbone présentes dans celle-ci. Cette étape peut simplement consister en un traitement thermique de frittage de la préforme fibreuse. Le liant qui imprègne la préforme peut alors être éliminé par la chaleur, et les charges à l'intérieur de la préforme sont frittées pour combler la porosité à l'intérieur de la préforme fibreuse et obtenir la pièce finale.

Le procédé mettant en oeuvre l'installation selon l'invention pour déposer une mèche chargée mise en forme permet de s'affranchir d'une étape dans laquelle on introduit des charges dans la préforme avant formation de la matrice, les charges étant déjà présente dans la préforme obtenue par dépôt des mèches. Le procédé selon l'invention est donc plus simple et plus rapide à réaliser que les procédés de l'art antérieur.

Dans tous l'exposé, les expressions « compris entre ... et ... » doivent être entendues comme incluant les bornes.

## Revendications

1. Installation (1) pour le dépôt d'une mèche (2) chargée mise en forme destinée à être utilisée pour fabriquer une pièce en matériau composite, l'installation comprenant au moins :
un dispositif d'alimentation (10) en mèche fibreuse imprégnée par une composition (16) comprenant un liant et des charges céramiques ou carbone,
une filière (20) de mise en forme et de drainage du liant définie par au moins une face poreuse (24), la filière présentant une section évolutive entre une section d'entrée et une section de sortie, la section d'entrée étant supérieure à la section de sortie,
un support (30 ; 50) en communication avec la sortie de la filière sur lequel la mèche mise en forme est destinée à être déposée, et
un premier dispositif de convoyage configuré pour transporter la mèche depuis le dispositif d'alimentation au travers de la filière et jusqu'au support.

2. Installation selon la revendication 1, dans laquelle la face poreuse (24) présente une taille de pores strictement inférieure à la taille des charges.

3. Installation selon la revendication 1 ou 2, comprenant en outre un deuxième dispositif de convoyage (28) configuré pour faire circuler un film poreux (27) entre la mèche (2) et la face poreuse (24).

4. Installation selon la revendication 3, dans laquelle le film poreux présente une taille de pores strictement supérieure à la taille des charges.

5. Installation selon l'une quelconque des revendications 1 à 4, comprenant en outre un dispositif de pompage en communication avec la face poreuse (24).

6. Installation selon l'une quelconque des revendications 1 à 5, comprenant en outre une tête de dépose (40) en communication avec la sortie de la filière et configurée pour déposer la mèche (2) mise en forme sur le support (50).

7. Installation selon la revendication 6, dans laquelle la tête de dépose (40) est une tête de dépose pour le placement automatique de fibres.

8. Installation selon l'une quelconque des revendications 1 à 5, dans laquelle le support (30) constitue un rouleau de stockage de la mèche (2) mise en forme.

9. Installation selon l'une quelconque des revendications 1 à 8, dans laquelle la face poreuse (24) est mobile dans une direction transversale par rapport à une direction de convoyage de la mèche (2) dans la filière (20).

10. Installation selon l'une quelconque des revendications 1 à 9, comprenant en outre un dispositif de chauffage de la filière.

11. Installation selon l'une quelconque des revendications 1 à 10, dans laquelle la filière comprend deux faces poreuses (24) situées en regard l'une de l'autre.

12. Procédé de fabrication d'une pièce en matériau composite, comprenant au moins :
- la formation d'une préforme fibreuse comprenant les charges céramiques ou carbone à partir d'une ou plusieurs mèches (2) mises en forme à l'aide de l'installation (1) selon l'une quelconque des revendications 1 à 11, et
- la formation d'une matrice dans la porosité de la préforme fibreuse à partir des charges céramiques ou carbone.

13. Procédé selon la revendication 12, dans lequel la matrice est formée par frittage des charges.

14. Procédé selon la revendication 12 ou 13, dans lequel chaque mèche avance pas à pas dans la filière (2) lors de sa mise en forme.

## Patentansprüche

1. Anlage (1) für die Ablage eines gefüllten, geformten Faserstrangs (2) zur Verwendung bei der Herstellung eines Teils aus Verbundmaterial, wobei die Anlage zumindest umfasst:
eine Vorrichtung zur Zuführung (10) eines Faserstrangs, der mit einer Zusammensetzung (16) umfassend ein Bindemittel und Keramik- oder Kohlenstoff-Füllstoffe imprägniert ist,
eine Düse (20) zur Formung und zum Abführen des Bindemittels, die durch mindestens eine poröse Fläche (24) definiert ist, wobei die Düse einen Querschnitt aufweist, der sich zwischen einem Eintrittsquerschnitt und einem Austrittsquerschnitt entwickelt, wobei der Eintrittsquerschnitt größer ist als der Austrittsquerschnitt,
einen Träger (30; 50) in Kommunikation mit dem Ausgang der Düse, auf welchem der geformte Faserstrang abgeschieden werden soll, und
eine erste Fördereinrichtung, die dazu ausgestaltet ist, den Faserstrang von der Zuführvorrichtung durch die Düse und bis zu dem Träger zu transportieren.

2. Anlage nach Anspruch 1, wobei die poröse Fläche (24) eine Porengröße aufweist, die strikt kleiner als die Größe der Füllstoffe ist.

3. Anlage nach Anspruch 1 oder 2, ferner umfassend eine zweite Fördervorrichtung (28), die dazu ausgestaltet ist, einen porösen Film (27) zwischen dem Faserstrang (2) und der porösen Fläche (24) zirkulieren zu lassen.

4. Anlage nach Anspruch 3, wobei der poröse Film eine Porengröße aufweist, die strikt größer als die Größe der Füllstoffe ist.

5. Anlage nach einem der Ansprüche 1 bis 4, ferner umfassend eine Pumpvorrichtung in Kommunikation mit der porösen Seite (24).

6. Anlage nach einem der Ansprüche 1 bis 5, ferner umfassend einen Ablegekopf (40) in Kommunikation mit dem Ausgang der Düse und der dazu ausgestaltet ist, den geformten Faserstrang (2) auf dem Träger (50) abzulegen.

7. Anlage nach Anspruch 6, wobei der Ablegekopf (40) ein Ablegekopf für die automatische Platzierung von Fasern ist.

8. Anlage nach einem der Ansprüche 1 bis 5, wobei der Träger (30) eine Rolle zur Speicherung des geformten Faserstrangs (2) bildet.

9. Anlage nach einem der Ansprüche 1 bis 8, wobei die poröse Fläche (24) in einer Richtung quer in Bezug auf eine Förderrichtung des Faserstrangs (2) in der Düse (20) beweglich ist.

10. Anlage nach einem der Ansprüche 1 bis 9, ferner umfassend eine Vorrichtung zur Beheizung der Düse.

11. Anlage nach einem der Ansprüche 1 bis 10, wobei die Düse zwei poröse Flächen (24) umfasst, die einander zugewandt positioniert sind.

12. Verfahren zur Herstellung eines Teils aus Verbundmaterial, umfassend zumindest:
- die Bildung einer Faservorform, umfassend Keramik- oder Kohlenstoff-Füllstoffe aus einem oder mehreren Fasersträngen (2), die mithilfe der Anlage (1) nach einem der Ansprüche 1 bis 11 geformt wurden, und
- die Bildung einer Matrix in der Porosität der Faservorform aus den Keramik- oder Kohlenstoff-Füllstoffen.

13. Verfahren nach Anspruch 12, wobei die Matrix durch Sinterung der Füllstoffe gebildet wird.

14. Verfahren nach Anspruch 12 oder 13, wobei jeder Faserstrang während seiner Formung schrittweise in der Düse (2) vorrückt.

## Claims

1. An installation (1) for depositing a shaped filled roving (2) for use in the manufacture of a composite-material component, the installation comprising at least:
a device (10) for feeding a fibrous roving impregnated with a composition (16) comprising a binder and ceramic or carbon fillers,
a die (20) for shaping and draining the binder defined by at least one porous surface (24), the die having an evolving section between an inlet section and an outlet section, the inlet section being greater than the outlet section,
a support (30; 50) in communication with the die outlet on which the shaped roving is to be deposited, and
a first conveying device configured to transport the roving from the feed device through the die and to the support.

2. The installation according to claim 1, wherein the porous surface (24) has a pore size strictly smaller than the size of the fillers.

3. The installation according to claim 1 or 2, further comprising a second conveying device (28) configured to circulate a porous film (27) between the roving (2) and the porous surface (24).

4. The installation according to claim 3, in which the porous film has a pore size strictly greater than the size of the fillers.

5. The installation according to any one of claims 1 to 4, further comprising a pumping device in communication with the porous surface (24).

6. The installation according to any one of claims 1 to 5, further comprising a dispensing head (40) in communication with the die outlet and configured to deposit the shaped roving (2) on the support (50).

7. The installation according to claim 6, wherein the dispensing head (40) is a dispensing head for automatic fiber placement.

8. The installation according to any one of claims 1 to 5, wherein the support (30) constitutes a storage roll for the shaped roving (2).

9. The installation according to any one of claims 1 to 8, wherein the porous surface (24) is movable in a direction transverse to a conveying direction of the roving (2) in the die (20).

10. The installation according to any one of claims 1 to 9, further comprising a die heating device.

11. The installation according to any one of claims 1 to 10, wherein the die comprises two porous surfaces (24) facing each other.

12. A process for manufacturing a composite-material component, comprising at least:
- forming a fibrous preform comprising the ceramic or carbon fillers from one or more rovings (2) shaped using the installation (1) according to any one of claims 1 to 11, and
- forming a matrix in the porosity of the fibrous preform from the ceramic or carbon fillers.

13. The process according to claim 12, wherein the matrix is formed by sintering the fillers.

14. The process according to claim 12 or 13, wherein each roving advances stepwise through the die (2) during its shaping.
